# EUROPÄISCHE PATENTSCHRIFT

(11) **EP 0 456 666 B1**
(45) Veröffentlichungstag und Bekanntmachung des Hinweises auf die Patenterteilung: **05.01.1994**
(21) Anmeldenummer: 90902148.7
(22) Anmeldetag: 01.02.1990
(51) Int. Cl.: B07B 9/00, B03B 9/06

(54) **ANLAGE ZUR BEHANDLUNG VON WERTSTOFFEN AUS BAUSTELLENABFÄLLEN ODER GEWERBEMÜLL**
INSTALLATION FOR TREATING VALUABLE MATERIALS FROM WASTE MATERIALS ON BUILDING SITES OR FROM INDUSTRIAL WASTE MATERIALS
INSTALLATION DE TRAITEMENT DE MATERIAUX DE VALEUR CONTENUS DANS DES DECHETS DE CHANTIERS OU INDUSTRIAUX

(30) Priorität: 04.02.1989 DE 3903325
(43) Veröffentlichungstag der Anmeldung: 21.11.1991
(73) Patentinhaber: Maschinenfabrik Bezner GmbH & Co. KG, 88212 Ravensburg (DE)
(72) Erfinder: FUCHS, Dieter, D-7981 Waldburg (DE); STROHHÄCKER, Peter, D-7980 Ravensburg (DE)
(74) Vertreter: Patentanwälte Eisele, Otten & Roth
(86) Internationale Anmeldenummer: DE9000062
(87) Internationale Veröffentlichungsnummer: WO9008601

(56) Entgegenhaltungen:
- EP-A- 0 173 934
- EP-A- 0 276 750
- WO-A-85/03890
- CH-A- 633 200
- DE-A- 3 248 493
- DE-B- 1 184 191
- Aufbereitungs-Technik, Vol. 26, Nr. 7, July; 1985, (Wiesbaden, DE);B.K. Singh et al:"Hochgeschwindigkeitssiebung zur Herstellung von mehreren Kornfraktionen auf einer Siebbahn" pages 405-409, see page 407, left hand column, lines 29-49; page 408, left hand column, lines 1-21; figures 4,5

## Beschreibung

Die Erfindung betrifft eine Anlage zur Behandlung von Wertstoffen oder Gewerbemüll nach dem Oberbegriff des Anspruchs 1.

Entsprechend dem Hinweis in der DE-A-32 48 493 fällt in der Bauwirtschaft neben dem klassischen Abbruchschutt ein Abfallmaterial an, das neben dem klassischen Schutt aus Sand, Erde, Steinen und Betonresten auch Mischschutt mit einem hohen Anteil an wiederverwertbaren Stoffen wie Holz, Metall, Textil, Papier, Kunststoff o. dgl. enthält. Dieser bei Sanierungsarbeiten von Gebäuden anfallende Mischschutt wurde bisher in großen Mengen Mülldeponien zugeführt mit der Folge, daß die Deponien eine hohe Mengenbelastung aufweisen. Wie in der genannten Patentschrift angegeben, ist es auch wünschenswert, diesen Mischschutt bzw. die Mischabfälle in ihre Bestandteile aufzutrennen, um insbesondere eine gezielte Weiterverwertung der Wertstoffe zu erhalten und gleichermaßen Deponievolumen einzusparen. Das Ziel muß demnach darin bestehen, den Mischschutt der Baustellenabfälle derart aufzutrennen, daß er in die wesentlichen Bestandteile zerlegt wird und diese einer weiteren Verwendung zugeführt werden.

Aus der eingangs erwähnten DE-A-32 48 493 ist zur Lösung dieser Aufgabe ein Verfahren sowie eine Anlage zum Durchführen des Verfahrens bekannt geworden, bei welcher eine Vielzahl von Verfahrensschritten mit automatischer und manueller Sortierung hintereinander geschaltet sind. So sind beispielsweise folgende Aggregate hintereinander geschaltet: Vorsieb, Bunker, erste Handlesestation, Schere, Eisenselektierer, erste Siebtrommel, NE-Selektierer, zweiter Handleseplatz, zweite Siebtrommel usw. Diese Vielzahl von einzelnen automatischen oder manuellen Bearbeitungsstationen sind durch Förderbänder miteinander verbunden. Die zum Schluß anfallenden Endfraktionen werden dann im allgemeinen wiederum mittels Förderbändern in gesonderte Bunker oder auf Halde transportiert.

Derartige Anlagen sind sehr großräumig verteilt, wobei die Verbindung zwischen den einzelnen Bearbeitungsstationen mittels Förderbändern erfolgt. Derartige Anlagen sind demnach nur an exponierter Stelle zu errichten, da diese meist auch mit einer erheblichen Umweltbelastung, insbesondere Lärm- und Staubbelastung verbunden sind. Die Baustellenabfälle müssen demnach oftmals über große Strecken zu diesen Spezialanlagen transportiert werden, was ebenfalls Kosten und Aufwand bedeutet. Weiterhin sind die im allgemeinen verwendeten Förderbänder zur Verbindung der einzelnen Bearbeitungsstationen sehr teuer und anfällig gegen derartig komplizierte Baustellenabfälle. Die Endfraktionen werden dann mittels zusätzlicher Förderer auf Halde oder in Containern transportiert.

Aus der CH-A-633 200 ist eine Aufbereitungsanlage nach der Gattung des Anspruchs 1 bekannt geworden, die jedoch als Aufbereitungsanlage für die bei der Kehricht-Verbrennung anfallende Schlacke dient. Derartige Anlagen sind beispielsweise auch aus der Sandaufbereitung bekannt geworden. Bei derartigen Anlagen handelt es sich um stationäre, feststehende Anlagen, die auf feststehenden Fundamenten und darauf feststehend montierten Anlageteilen gefertigt sind. Eine flexible Handhabung derartiger Anlagen insbesondere als mobile Stationen ist nicht vorgesehen.

Aus der EP-A-0 173 934 ist weiterhin ein Verfahren sowie eine Anlage zur Behandlung von anfallenden Bau-Mischschutt bekannt geworden, bei welcher der Bauschutt ebenfalls über eine Förderanlage verschiedenen Behandlungsstationen zugeführt wird. Dabei werden die aussortierten Fraktionen von den einzelnen Behandlungsstationen in darunterliegende, hintereinander angeordnete Bunker abgeladen und zwischengelagert. Diese bekannte Anlage ist jedoch derart konzipiert, daß sie viel Platz benötigt und keinesfalls mobil in Containerbauweise gestaltet werden kann.

Der Erfindung liegt die Aufgabe zugrunde, eine Anlage zu schaffen, die prinzipiell ebenfalls eine Auftrennung der Abfallbestandteile in die einzelnen Wertstoffe vornimmt, die jedoch sehr einfach, wenig störanfällig und flexibel aufgebaut ist. Insbesondere soll die Anlage derart einsetzbar sein, daß eine mobile, d. h. eine ortsunabhängige Verarbeitung derartiger Abfallmaterialien mit geringstem Aufwand möglich ist. Dabei sollen möglichst wenig anfällige Förderbänder oder Transportbänder verwendet werden.

Diese Aufgabe wird durch die kennzeichnenden Merkmale des Anspruchs 1 gelöst.

Der Erfindung liegt die Erkenntnis zugrunde, daß zum einen die Sortieraufgaben im wesentlichen durch ein Anlagenkonzept gelöst werden, die in einem transportablen Container zusammengefaßt sind. In einem solchen Container können an sich bekannte Sortiereinrichtungen, Sortiermaschinen oder auch Handleseplätze in geschlossenen Räumen angeordnet sein, wobei eine Umweltbelastung nach außen durch Lärm oder Staub vermieden werden kann. Insbesondere kann auch ein manueller Arbeitsplatz von den maschinellen Arbeitsplätzen raummäßig getrennt vorgesehen sein.

Um bei einer solchen, auf engstem Raum zusammengestellten Sortieranlage die Verwendung von Transportbändern zur Verteilung der in Vielfalt anfallenden Endfraktionen zu vermeiden, wird der transportable Container erfindungsgemäß auf einem sternförmigen Fundament aufgesetzt, wobei die sich kreuzenden Fundamentwände die Kammern für die einzelnen Fraktionen bilden. Es ist demnach lediglich ein, als Steigförderband ausgebildetes Transportband im wesentlichen notwendig, da die Weiterförderung der sortierten oder ausgeschiedenen Einzelbestandteile bzw. Fraktionen einfach dadurch geschieht, daß diese nach unten in die durch das Fundament-Kreuz gebildeten Bunker fallen.

Weitere Einzelheiten und vorteilhafte Weiterbildungen der Erfindung sind in den Unteransprüchen angegeben.

Besonders vorteilhaft ist die Anordnung des Fundaments in Form von sich senkrecht kreuzenden Betonwänden oder Stahlwänden. Diese Wände können auf eine ebene feste Fläche als Fertigbauteile an jedem Ort aufgestellt und der Container oben aufgesetzt werden. Hierdurch bleibt die gesamte Anlage außerordentlich mobil, d. h. sie kann nahezu an jedem geeigneten Ort in kurzer Zeit auf und abgebaut werden. Die Verbindung der sich kreuzenden Wände kann durch ineinandergreifende Einschnitte am Kreuzungspunkt vorgenommen werden, so daß die Wände ohne zusätzliche Befestigungen aufgestellt werden können.

Der transportable Container enthält in seinem Inneren eine an sich bekannte Siebmaschine zur Aussiebung verschiedener Fraktionen und eine nachgeschaltete Schrägsortiermaschine zur Trennung bestimmter Stoffe. Von diesem sog.

Maschinenraum abgetrennt ist ein zusätzlicher Sortierarbeitsplatz vorgesehen, an welchem die in den vorangehenden Maschinen nicht aussortierten Teile weiterbehandelt werden. Dieser Raum kann gleichzeitig als Steuerzentrale für den Maschinenraum dienen.

Vorteilhaft ist weiterhin, daß dem Steigförderer eine Grobsiebeinrichtung vorgeschaltet ist, die es ermöglicht, daß nur Abfallmaterial auf den Steigförderer gelangt, welches eine bestimmte Größe nicht überschreitet. Das Grobsieb hält demnach besonders sperrige und große Güter von der Sortieranlage im Container zurück. Im Ausführungsbeispiel ist dieses Grobsieb als grobes Maschinensieb ausgeführt, dessen oberes Gitter von Zeit zu Zeit hochklappbar ist, um die zurückgehaltenen groben Störstoffe seitlich abzuwerfen.

Der Steigförderer selbst ist vorzugsweise als Plattenband mit Eisenplatten als Tragelemente ausgestattet, um ein möglichst unempfindliches Fördersystem zu bilden. Zu Transportzwecken ist er zusammenklappbar. Um die Umweltbelastung klein zu halten, kann der Stetigförderer gekapselt sein, um Nässe von außen und Staub von innen zurückzuhalten.

Der Container ist vorzugsweise mit einer Klimaanlage und einer Entstaubungsanlage ausgerüstet. Hierdurch wird eine höchstmögliche Entlastung der Umwelt sowie des Handsortierplatzes erzielt. Die gesamte Anlage kann mittels eines mobilen Stromaggregats betrieben werden.

### Zeichnung

Ein vorteilhaftes und zweckmäßiges Ausführungsbeispiel der Erfindung ist in der Zeichnung dargestellt und in der nachfolgenden Beschreibung näher erläutert. Es zeigen
- Fig. 1: eine Seitenansicht der erfindungsgemäßen Anlage zur Durchführung des erfindungsgemäßen Verfahrens,
- Fig. 1a: eine detaillierte Darstellung des Containers in Fig. 1,
- Fig. 2: eine Draufsicht der Anlage nach Fig. 1,
- Fig. 2a: eine detaillierte Darstellung des Containers in Fig. 2,
- Fig. 3: ein Ausführungsbeispiel für eine Siebmaschine im Container und
- Fig. 4: ein Ausführungsbeispiel für eine Schrägsortiermaschine im Container nach Fig. 1 und 2.

### Beschreibung der Erfindung

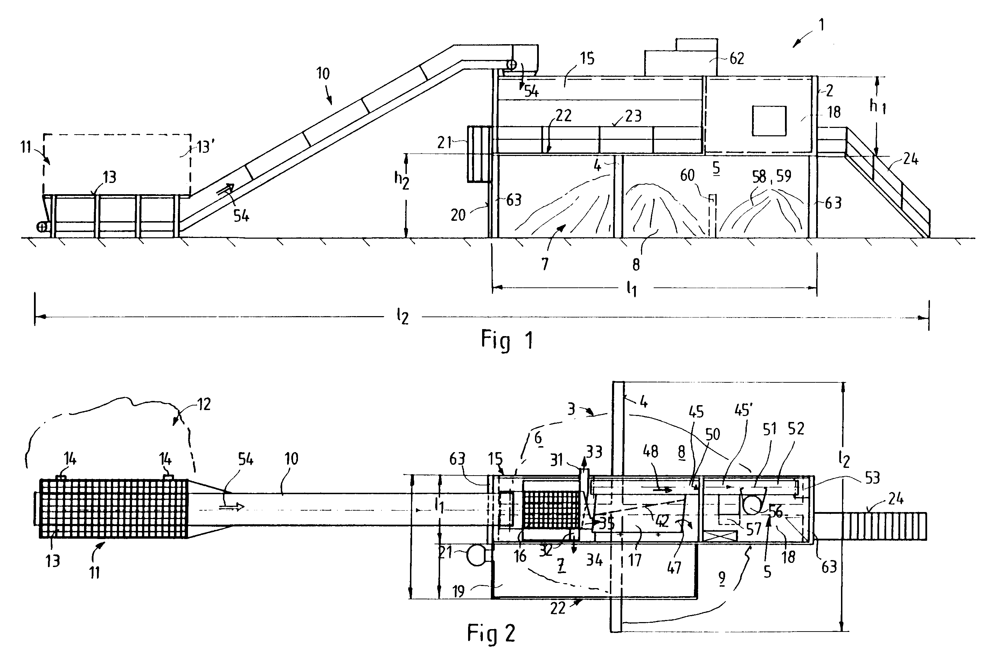

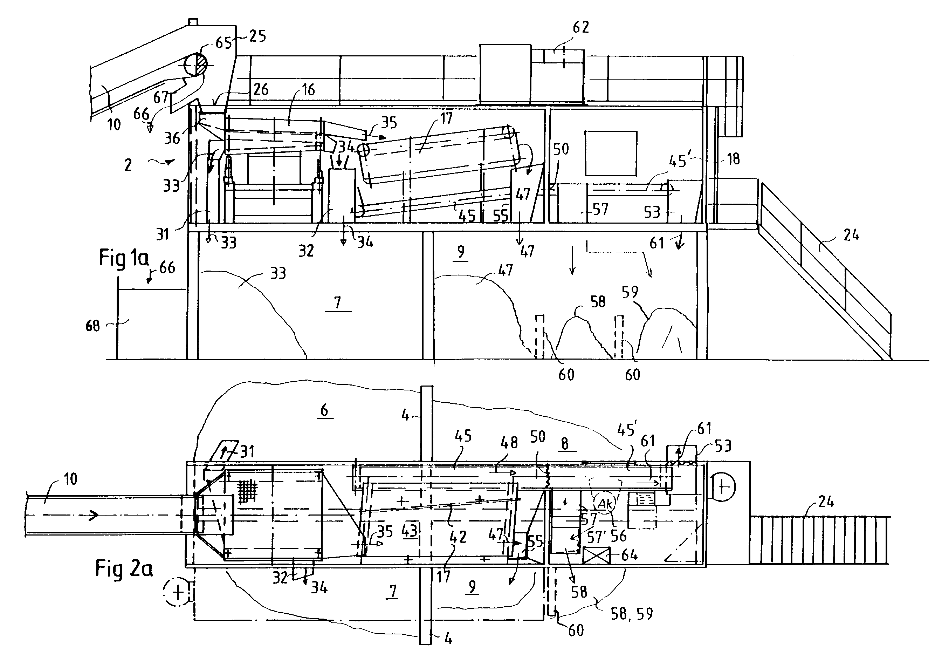

Bei dem in Fig. 1, 1a in Seitenansicht und Fig. 2, 2a in Draufsicht gezeigten Anlagenkonzept handelt es sich um eine mobile Sortieranlage insbesondere zur Sortierung von Baustellenabfällen. Hierfür weist die Gesamtanlage 1 einen Container 2 auf, der in seinen äußeren Abmessungen derart ausgebildet ist, daß er auf der Straße oder auf der Schiene transportierbar ist. Der zusammengeklappte Container hat beispielsweise eine Länge 1₁ ≈ 12,5 m, eine Breite b₁ ≈ 2,4 m und eine Höhe h₁ ≈ 2,8 m. Mit diesem transportablen Container kann der Entsorger den Arbeitsplatz der Anlage selbst bestimmen und die Anlage schnell aufbauen und nach Erledigung der Aufgabe ggf. wieder wegtransportieren. Der Container wird auf einem Fundament 3 aufgestellt, welches aus zwei sich senkrecht kreuzenden Retonwänden 4, 5 besteht. Die Betonwände weisen eine Höhe h₂ ≈ 3 m auf und bilden durch ihre sich in der Mitte kreuzende Anordnung 4 getrennte Kammern oder Bunker 6 bis 9. Die in Längsrichtung des Containers liegende Betonwand 5 weist etwa die gleiche Länge auf wie die Länge 1₁ des Containers 2. Die senkrecht hierzu stehende Betonwand 4 weist eine Länge von 1₂ ≈ 10 bis 15 m auf. Anstelle von Betonwänden können auch vorgefertigte Stahlwände als Abstützung bzw. Fundament für den Container verwendet werden. An den Enden der Betonwand 5 können noch zusätzliche Stütz- und Querwände 63 mit der Breite b₁ vorhanden sein.

Der auf das Fundament aufgesetzte Container wird von einem Steigförderer 10 mit dem zu sortierenden Gut beschickt. Um die Umempfindlichkeit der Förderers zu gewährleisten, ist der Steigförderer als Plattenbandförderer mit Eisenplatten ausgebildet und gegen Nässe nach innen hin und zur Vermeidung von Staubentwicklung sowie Lärmbelästigung nach außen hin gekapselt.

Dem Steigförderer 10 ist ein Grobsieb 11 vorgeschaltet, welches zur Vorabsiebung von groben Störstoffen und damit zum Schutz der nachfolgenden Maschinen und des Prozesses von übergroßen Teilen dient. Die anfallenden Baustellenabfälle werden deshalb zunächst auf das Grobsieb 11 aufgegeben, wobei z. B. große Bretter, schwere Eisenträger, oder übergroße Betonreste oder Mauerwerksreste zurückgehalten werden. Diese groben Störstoffe 12 werden vom groben Gitter 13 des Grobsiebs 11 dadurch entfernt, daß das Gitter 13 über Scharniere 14 hochklappbar ausgebildet ist. Die groben Störstoffe 12 kommen dann neben dem Grobsieb 11 zu liegen und können von dort aus wegtransportiert werden. Das Gitter 13 kann selbst auch einer Siebbewegung unterworfen sein.

Das von groben Störstoffen befreite Abfallmaterial gelangt durch das Gitter 13 auf den Stetigförderer 10 und wird mittels diesem zum Container 2 hochbefördert.

Wie aus Fig. 1 bzw. Fig. 1a sowie Fig. 2 bzw. Fig. 2a ersichtlich, besteht der Container 2 aus einem abgeschlossenen Maschinenraum 15 in welchem die Siebmaschine 16 und die nachgeschaltete Schrägsortiermaschine 17 angeordnet sind. Hiervon abgetrennt weist der Container 2 den zusätzlichen abgeschlossenen Sortierraum 18 auf. Der Sortierraum 18 ist lediglich über ein Sichtfenster oder ggf. über eine Tür mit dem Maschinenraum 15 verbunden. Der Maschinenraum 15 ist normalerweise geschlossen und nach außen hin nicht zuletzt aus Lärm- und Staubgründen abgekapselt. Um an den Maschinenraum 15, insbesondere für Wartungsarbeiten heranzukommen, ist die eine Seitenwand 19 in die horizontale Lage klappbar ausgeführt und bildet ein Podest 22 vor dem Maschinenraum. Eine Aufstiegleiter 20 mit einem Rückenschutzkorb 21 dient zum Aufstieg auf das durch die heruntergeklappte Seitenwand 19 gebildete Podest 22 mit einem zusätzlichen Geländer 23. Der Sortierraum 18 ist durch eine Außentreppe 24 erreichbar.

Das auf dem nach außen hin abgekapselten Steigförderer 10 über die Einschüttvorrichtung 25 in den Container 2 von oben her eingebrachte Mischgut gelangt über die abgekapselte Öffnung 26 im Container 2 zur Siebmaschine 16. Dabei ist das Ende des Steigförderers 10 mit einer Magnetbandtrommel 65 versehen, welches magnetische Teile 66 über den Auswurf 67 in einen zusätzlichen Behälter 68 befördert.

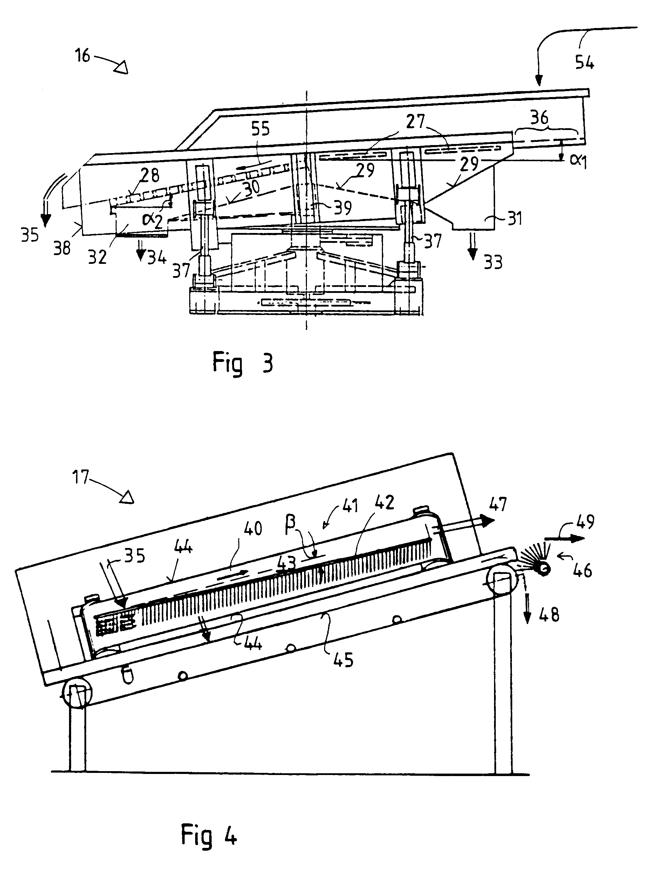

Die in Fig. 3 in Seitenansicht prinzipiell näher dargestellte Siebmaschine 16 besteht aus einem Feinsieb 27 und einem Sieb 28 für mittelgroßes Gut zur Trennung der aufgegebenen Bestandteile. Unterhalb dieser Siebflächen 27, 28 sind trichterförmige Schrägen 29 bzw. Rutschen 30 angeordnet, die das ausgesiebte Material zu den Ausgängen 31 bzw. 32 leiten. Das aus dem Ausgang 31 über das Feinsieb 27 ausgesiebte Material wird als Feingut 33 und das aus dem Ausgang 32 über das Sieb 28 abgesiebte Material als Mittelgut 34 bezeichnet. Das noch gröbere Material, welches auf dem Mittelsieb 28 verbleibt, gelangt am Ausgang der Siebmaschine als Grobgut 35 zur Weiterverarbeitung.

Der oberste Feinsiebboden 27 weist gegenüber der Horizontalen einen Neigungswinkel von ca. α₁ ≈ 3 bis 5°, der nachfolgende Mitteilsiebboden 28 einen Neigungswinkel von α₂ ≈ 10 bis 15° auf. Das Feinsieb 27 erstreckt sich etwa über die erste Hälfte, das Mittelsieb 28 etwa über die zweite Hälfte der gesamten Siebmaschine 16 wobei ein zusätzlicher Einlaufbereich 36 vorgesehen ist.

Der Schwingungsantrieb der Siebmaschine 16 erfolgt mittels eines auf Gummischwingelementen 37 gelagerten äußeren Siebrahmen 38, wobei ein Exzenterantrieb 39 zur Durchführung einer horizontalen Kreisschwingbewegung des Siebrahmens 38 mit großem Kreisschwingdurchmesser von ca. 100 mm vorgesehen ist. Ein solcher Antrieb ist beispielsweise von der Firma Rosta-Werk AG, CH 5502 Hunzenschwil für verschiedene Anwendungszwecke unter der Bezeichnung "Rosta Kreuzgelenke Typ AK" bekannt geworden. Ein ähnlicher Antrieb ist in der DE-AS 1 184 191 enthalten.

Der Siebmaschine 16 ist gemäß der Darstellung in Fig. 1a sowie Fig. 2 bzw. Fig. 2a eine Schrägsortiermaschine 17 nachgeschaltet, wie sie näher in Fig. 4 dargestellt ist. Diese Schrägsortiermaschine ist prinzipiell aus der europäischen Patentanmeldung Nr. 0 123 825 der Anmelderin bekannt geworden. Auf die Beschreibung dieser Maschine in dieser vorveröffentlichten Anmeldung wird ausdrücklich Bezug genommen.

Gemäß dieser Sortiereinrichtung 17 zur Aussortierung von Wertstoffen u. a. aus Gewerbemüll ist ein in Transportrichtung 40 ansteigendes Förderband 41 vorgesehen, das einen zur Bewegungsrichtung des Förderbandes winklig angeordneten Fangvorhang 42 aufweist, wobei das Förderband eine quer zur Bewegungsrichtung abfallende oder schräge, in Schwingbewegung versetzbare Transportebene 43 aufweist, auf der der Fangvorhang 42 in einem Winkel β zur parallel zur Bewegungsrichtung verlaufenden Längskante 44 des Förderbandes verläuft. Unterhalb der unteren Längskante 44 des schrägen Förderbandes 41 ist ein weiteres, ebenes oder gemuldetes, vorzugsweise ebenfalls in Transportrichtung ansteigendes Förderband 45 vorgesehen. Am Ende dieses Förderbandes kann eine rotierende Bürste 46 zur Abtrennung von leichteren Kunststoffteilen vorgesehen sein.

Mittels der Schrägsortiermaschine bleibt flächenhaftes Gut auf dem Transportband 43 liegen oder wird vom Fangvorhang 42 zurückgehalten. Schweres, körperförmiges Gut rutscht jedoch infolge der Schwerkraft der Schräge der Transportebene 43 hinab und durchschlägt den Vorhang 42 und gelangt auf das untere Förderband 45. Der Austrag des flächenhaften Materials erfolgt am Ende der schrägen Transportebene 43 als Fraktion 47, der Austrag des schwereren, körperförmigen Gutes am Ende der Fördereinrichtung 45 als Fraktion 48. Sofern die Bürste 46 vorhanden ist, kann eine weitere Fraktion 49 z. B. für körperförmige Kunststoffteile vorhanden sein.

Der Fangvorhang 42 der Schrägsortiermaschine 17 kann auch als umlaufender Fangvorhang ausgebildet sein, wie dies beispielsweise in der PCT-Anmeldung WO 85/03890 wiedergegeben ist.

Der Schrägsortiermaschine 17 ist im Container der abgeschlossene Sortierraum 18 nachgeschaltet, wobei das Förderband 45, 45' durch eine Schleusenöffnung 50 hindurch ragt und zum manuellen Bearbeitungsplatz 51 führt. Am Ende dieses, in der Geschwindigkeit variablen Förderbandabschnittes 52 ist ein Abwurfschacht 53 in den Bunkerraum 8 vorgesehen.

Die erfindungsgemäße gesamte Anlage arbeitet im übrigen wie folgt:
Die angelieferten Baustellenabfälle werden zunächst mit einem Lader auf das Grobsieb 11 aufgelegt, um die groben Störstoffe, insbesondere Großteile wie Eisenstangen, große Holzteile, große Platten o. dgl. zu entfernen. Die Siebmaschenweite bei der Bearbeitung von Baustellenabfällen kann beispielsweise bei diesem Grobsieb ca.250 x 300 mm betragen. Von Zeit zu Zeit wird das Grobsieb 13 umgekippt, was zur nicht in der erfindungsgemäßen Anlage sortierbaren Grobfraktion 12 führt. Abfälle, die das Grobsieb 11 passieren, gelangen als Fraktion 54 über den Steigförderer 10 zur Einschüttvorrichtung 25 mit Magnetabscheidung 65 - 68 und über die Zufuhröffnung 26 zum Einlaufbereich 36 der Siebmaschine 16. Über die Einschüttvorrichtung 25 mit Öffnung 26 ist der Steigförderer 10 gekapselt mit dem Container 2 verbunden, so daß der Container auch nach außen hin im Betrieb hermetisch abgeschlossen ist. Die über den Steigförderer zugeführte Fraktion 54 gelangt über den Einlaufbereich 36 der Siebmaschine 16 auf das Feinsieb 27.

Hier wird im Ausführungsbeispiel eine Feinfraktion 33 ausgetragen, die eine Korngröße von z. B. < 12 mm aufweist. Diese Feinfraktion gelangt über den Ausgang 31 zum Bunker 6.

Die Restfraktion 55 wird über das Mittelsieb 28 geführt und ergibt eine zweite oder mittlere Fraktion 34, die aus dem Ausgang 32 ausgetragen und in den Bunkerteil 7 gelangt. Zwischen dem Bunker 7 und der Austragsöffnung 32 kann noch eine zusätzliche Nachbehandlungsstation vorgesehen sein, die mittels Luft leicht ausblasbare Teile heraussieben kann. Im übrigen gelangt durch das mittlere Sieb 28 ein Anteil an Mittelgut (Fraktion 34) mit einer Korngröße von z. B. > 12 mm bis zu einer Korngröße von beispielsweise 50 mm ist.

Das Gut, welches das mittlere Sieb 28 nicht durchdringen kann, gelangt als Grobgut bzw. Fraktion 35 auf die Schrägsortiermaschine 17. Hier erfolgt eine Trennung nach Körperform und Gewicht, wobei flächenhafte Teile wie Platten, Papier, Kunststoff usw. auf der ebenen Transportebene 43 liegen bleiben und am Ende als Fraktion 47 in dem Bunkerteil 9 ausgetragen werden. Ein Austragsschacht 55 dient zur Zuführung dieser Fraktion zum Bunker 9.

Körperförmige oder rollende, insbesondere schwerere Teile wandern durch Schwerkraft seitlich von der Transportebene 43 herunter, durchdringen den stehenden oder rotierenden Fangvorhang 42 und gelangen zu dem darunterliegenden Förderband 45. Am Ende dieses Förderbands 45, 45' für schweres, körperförmiges Gut kann wahlweise noch eine umlaufende Bürste 46 vorhanden sein, wie in Fig. 4 dargestellt. Diese Bürste trennt ggf. leichtere Stoffanteile von schwereren Steinteilen und bildet so eine zusätzliche Fraktion 49.

Das Förderband 45 wird durch eine Schleuse 50 direkt in den Handsortierraum 18 geführt. Dieser Teil der Fördereinrichtung ist mit 45' gekennzeichnet. Der Förderer 45, 45' kann mit einer variablen Bandgeschwindigkeit ausgerüstet sein, um ihn an die Arbeitsgeschwindigkeit der Bedienerperson 56 anzupassen. Der auf dem Transportband 45 angeordnete Reststrom (Fraktion 48) wird manuell von der Bedienerperson 56 nachsortiert und von noch vorhandenen Stör- und Reststoffen befreit. Beispielsweise können noch eventuell vorhandene Metallteile o. dgl. entfernt werden. Diese Stör- und Reststoffe werden über ein oder mehrere Abfallschächte 57, 57' eingeworfen und bilden im Bunker 9 weitere Restfraktionen 58, 59. Ggf. können noch kleine Zwischenwände 60 aufgestellt werden. Die Elektroinstallation ist mit Bezugszeichen 64 gekennzeichnet.

Die auf dem Förderband 45' verbleibende Fraktion 61 gelangt in den Abwurfschacht 53 und von dort aus in den Bunkerteil 8. Dieser restliche Grobanteil weist beispielsweise eine Korngröße von z. B. > 50 mm auf.

Im Bunker 6 lagert demnach eine Fraktion 33 mit einer Größe von ca. 0 bis 12 mm, im Bunker 7 eine Fraktion 34 mit einer Größe von ca. 12 bis 50 mm, im Bunker 9 eine Fraktion 47 von ca. 50 bis 300 mm als flächenhaftes Gut und im Bunker 8 eine Fraktion 61, die größer als 50 mm Korngröße ist, als schweres körperförmiges Gut. Die Bunker 6, 7, 8 sind demnach im wesentlichen für Sand und Steingut verschiedener Korngrößen und der Bunker 9 für sonstige Reste konzipiert.

Auf dem Container 2 befindet sich eine Vorrichtung 62 zur Absaugung bzw. Filterung und Klimatisierung sowohl des Maschinenraums 15 als auch des Sortierraums 18. Dabei dient die Absaugung insbesondere der Entstaubung des Maschinenraums, d. h. es wird ein Unterdruck hergestellt, der es verhindert, daß Staub in den Arbeitsraum 18 gelangen kann. Zusätzlich ist eine Klimatisierung und Belüftung des Maschinenraums 15 sowie insbesondere auch des Sortierraums 18 vorgesehen. Das Anlagenkonzept weist demnach eine möglichst geringe Umweltbelastung auf. Die Seitenwand 19 wird nur dann seitlich heruntergeklappt, wenn ein Zugang zum Maschinenraum 15 erforderlich ist. Im übrigen bleibt der Container nach außen hin geschlossen, so daß eine möglichst geringe Geräusche- und Staubimmission vorhanden ist.

Die Länge der Gesamtanlage beträgt 1₂ ≈ 35 m. Selbstverständlich richtet sich die Höhe h₂ der Betonwände 4, 5 je nach gewünschter Höhe der aufzuschüttenden Fraktionen in den Bunkern 7 bis 9. Im allgemeinen reicht hierfür eine Höhe h₂ ≈ 3 m aus.

Die Erfindung ist nicht auf das beschriebene und dargestellte Ausführungsbeispiel umschränkt. Sie umfaßt auch vielmehr alle fachmännischen Weiterbildungen und Ausgestaltungen ohne eigenen erfinderischen Gehalt.

## Patentansprüche

1. Anlage zur Behandlung von Wertstoffen aus Baustellenabfällen oder Gewerbemüll, wobei der Wertstoff über einen Steigförderer (10) einer hochgelegenen, Sortiereinrichtung (16, 17) zuführbar ist, welche auf einem transportablen Fundament (3) aus senkrechten Wänden (4, 5) angeordnet ist und unterhalb der Sortiereinrichtung (16, 17) mehrere Kammern oder Bunker (6 bis 9) bildet, wobei die Sortiereinrichtung (16, 17) zur Auftrennung der Wertstoffe in mehrere Fraktionen (33, 34, 47, 48) dient, die in die durch das Fundament gebildeten Kammern oder Bunker (6, 7, 8, 9) unterhalb der Sortiereinrichtung (16, 17) als Zwischenlager abwerfbar sind, dadurch gekennzeichnet, daß vor dem Steigförderer (10) eine Grobsiebeinrichtung (11) zur Aussiebung sperriger und großer Teile vorgesehen ist, daß das Fundament (3) durch wenigstens zwei senkrecht sich kreuzende oder sternförmig angeordnete Betonwände (4, 5) oder Stahlwände gebildet ist, zur Bildung von wenigstens vier Kammern bzw. Materialbunker (6 - 9), daß auf dem Fundament (3) ein geschlossener Container (2) aufsetzbar ist, der eine Siebmaschine (16) mit in Richtung des Materialstroms hintereinander geschalteten Sieben (27, 28) aufweist, zur Trennung des Materialstroms (54) in verschiedene Fraktionen (33 bis 35), die insgesamt oder teilweise den Bunkern (6, 7) unterhalb des Containers (2) oder einer nachfolgenden Bearbeitungsstation (17) zuführbar sind.

2. Anlage nach Anspruch 1, dadurch gekennzeichnet, daß der Container (2) eine Schrägsortiermaschine (17) aufweist, bestehend aus einer schrägen, in Förderrichtung ansteigenden, in Vibrationen versetzbaren Fördereinrichtung (43) und einer vorzugsweise schräg auf der Fördereinrichtung (43) angeordneten Rückhaltevorrichtung (42), wobei flächenhaftes und/oder leichteres Gut auf der Fördereinrichtung (43) verbleibt und als Fraktion (47) dem Bunker (9) zugeführt wird, daß körperförmiges und/oder rollendes und/oder schwereres Gut durch Schwerkraft seitlich auf der Fördereinrichtung (43) herabgleitet, den Rückhaltevorhang (42) durchdringt und einem parallel zur Fördereinrichtung (43) verlaufenden Förderband (45, 45') zugeführt wird, welches diese Fraktion einer weiteren Bearbeitungsstation (56) und/oder einem Bunker zuführt.

3. Anlage nach Anspruch 1 oder 2, bis 4, dadurch gekennzeichnet, daß der Container (2) einen separaten Raum (18) mit Handsortierplatz (56) aufweist, zur Absonderung von Stör- und Reststoffen (58, 59).

4. Anlage nach einem oder mehreren der vorhergehenden Ansprüche 1 bis 3, dadurch gekennzeichnet, daß der Siebmaschine (16) für das zurückgehaltene Grobgut (Fraktion 35) eine Schrägsortiermaschine (17) und dieser ggf. ein Handleseplatz (56) nachgeschaltet ist.

5. Anlage nach einem oder mehreren der vorhergehenden Ansprüche, dadurch gekennzeichnet, daß der Maschinenraum (15) mit Siebmaschine (16) und Schrägsortiermaschine (17) und/oder der hiervon abgetrennte Handsortierraum (18) mit einer Klimaanlage und/oder Entstaubungsanlage versehen ist.

6. Anlage nach einem oder mehreren der vorhergehenden Ansprüche, dadurch gekennzeichnet, daß am Ende des Steigförderers (10) eine Magnetbandtrommel (65) für eine Abscheidung magnetischer Teile (66) vorgesehen ist.

7. Anlage nach Anspruch 1, dadurch gekennzeichnet, daß der Steigförderer (10) als Plattenbandförderer mit Eisenplatten ausgebildet und gegen Nässe und Geräusche-und Staubimmission gekapselt ist, wobei der Steigförderer zu Transportzwecken zerlegbar oder zusammenklappbar ist und daß am oberen Ende des Steigförderers (10) eine Magnetbandtrommel 65 vorgesehen ist.

## Claims

1. Installation for processing valuable substances from building site waste or industrial refuse, the valuable substance being able to be supplied by way of an ascending conveyor (10) to an elevated sorting device (16, 17), which is located on a transportable base (3) of vertical walls (4, 5) and below the sorting device (16, 17) forms several chambers or bunkers (6 to 9), the sorting device (16, 17) serving for the separation of the valuable substances into several fractions (33, 34, 47, 48), which can be thrown into the chambers or bunkers (6, 7, 8, 9) formed by the base below the sorting device (16, 17) as intermediate stores, characterised in that provided in front of the ascending conveyor (10) is a coarse screening device (11) for screening out bulky and large parts, that the base (3) is formed by at least two concrete walls (4, 5) or steel walls intersecting each other at right angles or arranged in the shape of a star, for the formation of at least four chambers or material bunkers (6-9), that a closed container (2) can be placed on the base (3), which container comprises a screening machine (16) with screens (27, 28) arranged one behind the other in the direction of the material stream, for separating the material stream (54) into different fractions (33 to 35), which can be supplied in total or partly to the bunkers (6, 7) below the container (2) or to a subsequent processing station (17).

2. Installation according to Claim 1, characterised in that the container (2) comprises an inclined sorting machine (17), consisting of an inclined conveyor device (43) ascending in the conveying direction and able to be set in vibration and a retaining device (42) arranged preferably in an inclined manner on the conveyor device (43), in which case flat and/or lighter material remains on the conveyor device (43) and is supplied as a fraction (47) to the bunker (9), that solid and/or rolling and/or heavier material slides down due to gravity laterally on the conveyor device (43), penetrates the retaining curtain (42) and is supplied to a conveyor belt (45, 45') extending parallel to the conveyor device (43), which conveyor belt supplies this fraction to a further processing station (56) and/or to a bunker.

3. Installation according to Claim 1 or 2 to 4, characterised in that the container (2) comprises a separate chamber (18) with manual sorting station (56), for the separation of troublesome and residual materials (58, 59).

4. Installation according to one or more of the preceding Claims 1 to 3, characterised in that an inclined sorting machine (17) follows the screening machine (16) for the coarse material retained (fraction 35) and a manual sorting station (56) possibly follows this inclined sorting machine (17).

5. Installation according to one or more of the preceding Claims, characterised in that the machine chamber (15) is provided with a screening machine (16) and inclined sorting machine (17) and/or manual sorting chamber (18) separated therefrom with an air-conditioning plant and/or dust-removal plant.

6. Installation according to one or more of the preceding Claims, characterised in that provided at the end of the inclined conveyor (10) is a magnetic belt drum (65) for the separation of magnetic parts (66).

7. Installation according to Claim 1, characterised in that the inclined conveyor (10) is constructed as a plate conveyor belt with iron plates and is encapsulated against moisture and the emission of noise and dust, the inclined conveyor being able to be dismantled or collapsed for transportation purposes and that a magnetic belt drum (65) is provided at the upper end of the inclined conveyor (10).

## Revendications

1. Installation pour le traitement de matériaux de valeur provenant de déchets de construction ou de déchets industriels, le matériau de valeur pouvant être amené, par l'intermédiaire d'un transporteur incliné (10), à un dispositif de triage surélevé (16,17), laquelle est agencée sur un soubassement transportable (3) constitué de parois orthogonales (4,5) et forme, au-dessous du dispositif de triage (16,17), plusieurs chambres ou silos (6 à 9), le dispositif de triage (16,17) servant à séparer les matériaux de valeur en plusieurs fractions (33,34,47,48), qui peuvent être éjectées dans les chambres ou silos (6,7,8,9) formés à travers le soubassement, au-dessous du dispositif de triage (16,17), en tant que stockages intermédiaires, caractérisée en ce que, devant le transporteur incliné (10), est prévu un dispositif de tamisage grossier (11) pour tamiser les parties les plus volumineuses et les plus grandes, en ce que le soubassement (3) est formé par au moins deux parois d'acier ou parois de béton (4,5) agencées en se croisant perpendiculairement ou en étoile, pour former au moins quatre chambres ou silos (6-9), en ce que, sur le soubassement (3), un conteneur (2) fermé peut être mis en place, lequel présente une machine de tamisage (16) comportant des tamis (27,28) montés l'un derrière l'autre en direction du flux de matière, pour la séparation du flux de matière (56) en différentes fractions (33 à 35) qui, en totalité ou partiellement, peuvent être amenées aux silos (6,7) au-dessous du conteneur (2) ou à un poste de traitement suivant (17).

2. Installation selon la revendication 1,
caractérisée en ce que le conteneur (2) présente une machine de triage inclinée (17) constituée d'un dispositif de transport (43) incliné, montant dans la direction de transport et pouvant être soumis à des vibrations, et d'un dispositif de retenue (42) agencé de préférence de façon inclinée sur le dispositif de transport (43), la matière plus légère et/ou adhérant à la surface demeurant sur le dispositif de transport (43) et étant amenée au silo (9) comme fraction (47), en ce que la matière plus lourde et/ou qui roule et/ou à trois dimensions glissant latéralement sur le dispositif de transport (43) du fait de la force de gravité, traversant le rideau de retenue (42) et étant amenée à un transporteur à bande (45,45') s'étendant parallèlement au dispositif de transport (43), lequel amène cette fraction à un autre poste de traitement (56) et/ou à un silo.

3. Installation selon la revendication 1 ou 2,
caractérisée en ce que le conteneur (2) présente un espace séparé (18) à emplacement de triage manuel (56), pour séparer les matériaux résiduels et gênants (58,59).

4. Installation selon une ou plusieurs des revendications 1 à 3,
caractérisée en ce qu'une machine de triage inclinée (17) est disposée en aval de la machine de tamisage (16) pour la matière grossière retenue (fraction 35) et, le cas échéant, un emplacement de triage manuel (56) est prévu en aval de celle-ci.

5. Installation selon une ou plusieurs des revendication précédentes,
caractérisée en ce que l'espace de machine (15) comportant la machine de tamisage (16) et la machine de triage inclinée (17) et/ou l'espace de triage manuel (18) qui en est séparé sont munis d'une installation de conditionnement d'air et/ou d'une installation de dépoussiérage.

6. Installation selon une ou plusieurs des revendications précédentes,
caractérisée en ce que, à l'extrémité du transporteur incliné (10), est prévu un tambour à bande magnétique (65) pour séparer les pièces magnétiques (66).

7. Installation selon la revendication 1,
caractérisée en ce que le transporteur incliné (10) est réalisé en tant que transporteur à bande à plaques de fer et est protégé contre l'humidité, et le bruit et la poussière, le transporteur incliné pouvant être replié ou démonté dans des buts de transport, et en ce que, à l'extrémité supérieure du transporteur incliné (10), un tambour à bande magnétique (65) est prévu.
